# EUROPÄISCHE PATENTSCHRIFT

(11) **EP 1 339 571 B1**
(45) Veröffentlichungstag und Bekanntmachung des Hinweises auf die Patenterteilung: **09.06.2004**
(21) Anmeldenummer: 01997417.9
(22) Anmeldetag: 19.10.2001
(51) Int. Cl.: B60R 21/01

(54) **STEUERGERÄT FÜR EIN RÜCKHALTESYSTEM IN EINEM KRAFTFAHRZEUG**
CONTROL DEVICE FOR A RESTRAINT SYSTEM IN A MOTOR VEHICLE
UNITE DE COMMANDE POUR SYSTEME DE RETENUE DANS UN VEHICULE A MOTEUR

(30) Priorität: 21.11.2000 DE 10057916
(43) Veröffentlichungstag der Anmeldung: 03.09.2003
(73) Patentinhaber: ROBERT BOSCH GMBH, 70442 Stuttgart (DE)
(72) Erfinder: SCHUMACHER, Hartmut, 71691 Freiberg (DE); TAUFER, Peter, 71272 Renningen (DE); GROTENDIEK, Torsten, 74321 Bietigheim-Bissingen (DE); TSCHENTSCHER, Harald, 71723 Grossbottwar (DE); WEBER, Werner, 71665 Vaihingen (DE)
(86) Internationale Anmeldenummer: PCT/DE2001/003992
(87) Internationale Veröffentlichungsnummer: WO 2002/042123

(56) Entgegenhaltungen:
- EP-A- 0 518 501
- WO-A-00/41918
- DE-A- 3 706 765
- DE-A- 3 736 294
- DE-A- 4 425 846
- DE-A- 19 852 468
- DE-A- 19 918 634

## Beschreibung

### Stand der Technik

Die Erfindung geht aus von einem Steuergerät für ein Rückhaltesystem in einem Kraftfahrzeug, beispielsweise gemäß Dokument DE 19 852 468 A.

Es sind bereits Airbag-Steuersysteme bekannt, in denen ein Mikrocontroller als Prozessor von einem Watchdog auf seine Funktion hin überwacht wird. Der Prozessor ist selbst mit verschiedenen Sensoren im Kraftfahrzeug oder im Steuergerät verbunden, wobei die Sensoren einen Aufprall sensieren. Teilweise werden in Airbag-Steuergeräten mechanische Sicherheitsschalter verwendet, bei denen ein Ringmagnet bei negativen Beschleunigungen gegen eine Feder verschoben wird und ein Reed-Kontakt dann schließt. Der Reed-Kontakt gibt dann die dieser Verzögerungsrichtung zugeordneten Rückhaltemittel entweder direkt über ein Freigabesignal an die Endstufen oder indirekt über den Mikrocontroller frei. Teilweise wird durch das erzeugte Signal auch ein im Hauptzündstrompfad liegender Sicherheitshalbleiter freigegeben, der die benötigten Zündströme zu den Endstufen fließen lässt.

### Vorteile der Erfindung

Das erfindungsgemäße Steuergerät für ein Rückhaltesystem in einem Kraftfahrzeug mit den Merkmalen des unabhängigen Patentanspruchs hat demgegenüber den Vorteil, dass ein Sicherheitsschalter vorhanden ist, der auch einen Watchdog aufweist. Die Funktionalität des Sicherheitsschalters wird ermöglicht, indem der Sicherheitsschalter die Sensorsignale, die von den Sensoren zu dem Prozessor übertragen werden, selbstständig überprüft und in Abhängigkeit vom Ergebnis der Überprüfung über eine Zeiteinheit Endstufen für Zündkreise freigibt. Dabei wird ein Sicherheitsschalter realisiert, der Sensorsignale aus jeder sensierten Richtung auswertet, womit ein multidirektionaler Sicherheitsschalter vorliegt. Damit ist eine zusätzliche Absicherung, die unabhängig von der Funktionalität des Mikroprozessors ist, vorhanden. Dies erhöht die Sicherheit gegenüber einer ungewollten Auslösung durch einen defekten Prozessor. Darüber hinaus weist der Sicherheitsschalter entsprechende Hardware auf, um individuelle Algorithmen und Schwellen für die unterschiedlichen Sensorsignale einzusetzen. Es liegt damit auch eine redundante Hardware vor, um eine ungewollte Auslösung von Rückhaltemitteln zu vermeiden.

Durch die in den abhängigen Ansprüchen aufgeführten Maßnahmen und Weiterbildungen sind vorteilhafte Verbesserungen des im unabhängigen Patentanspruch angegebenen Steuergeräts für ein Rückhaltesystem in einem Kraftfahrzeug möglich.

Besonders vorteilhaft ist, dass der Sicherheitsschalter den Sensorsignalen Zusatzinformationen entnimmt und in Abhängigkeit von diesen Zusatzinformationen die Sensorsignale verarbeitet. Diese Zusatzinformationen sind hier Statusinformationen des Sensors, z.B. laufender Test oder Fehler erkannt und auch kanalspezifische Informationen, beispielsweise eine Kennung, die die Sensorsignale in auslöserelevant und nicht auslöserelevant einteilt und bei vorliegender Auslöserelevanz noch zusätzlich die Art der Signalquelle, also ob es sich von um einen Frontaufprallsensor, einen Seitenaufprallsensor oder Beschleunigungssignale von Satelliten, das sind im Fahrzeug verteilte Sensoren, handelt. In Abhängigkeit von dieser Zusatzinformation verwendet dann der Sicherheitsschalter den entsprechenden Hardware-Algorithmus und die entsprechenden Schwellen, um diese Sensorsignale dann korrekt zu verarbeiten.

Weiterhin ist es von Vorteil, dass der Sicherheitsschalter in Abhängigkeit von den Sensor-Zusatzinformationen den entsprechenden Algorithmus aus der eigenen Hardware lädt und entsprechende Schwellwerte verwendet, um die Sensorsignale zu verarbeiten. In Abhängigkeit von diesen Zusatzinformationen erfolgt dann auch gegebenenfalls eine Freigabe der Endstufen. Mit den Zusatzinformationen ist es danach möglich, die Verarbeitung der Sensorsignale zu steuern.

Darüber hinaus ist es von Vorteil, dass der Sicherheitsschalter nur den jeweils den Sensoren zugeordneten Endstufen eine Freigabe erteilt. Detektiert, also ein Seitenaufprallsensor ein Sensorsignal, dann wird nur der Seitenaufprallschutz freigegeben.

Darüber hinaus ist es von Vorteil, dass beim Starten des Fahrzeugs das Steuergerät eingeschaltet und dabei ein Test des erfindungsgemäßen Sicherheitsschalters durch Erzeugen eines Testsignals der Sensoren durchgeführt wird. Dadurch überwacht der Prozessor, ob der Sicherheitsschalter das Überwachen der Sensorsignale erfüllen kann und entsprechende Freigabesignale an die Endstufen überträgt.

Schließlich ist es auch von Vorteil, dass der Sicherheitsschalter mit den Endstufen über zwei Freigabeleitungen verbunden ist, wobei eine der Freigabeleitungen für die Plusendstufen und eine weitere Freigabeleitung an die Minusendstufen angeschlossen ist, so dass über diese beiden Leitungen die gesamten Endstufen sperrbar bzw. freizugeben sind. Mit weiteren Gruppenleitungen ist der Sicherheitsschalter mit den Endstufen der einzelnen Zündmittelgruppen verbindbar, so dass damit selektiv Zündmittel freigebbar sind wie beispielsweise bei einem Frontalaufprall die Frontairbags.

### Zeichnung

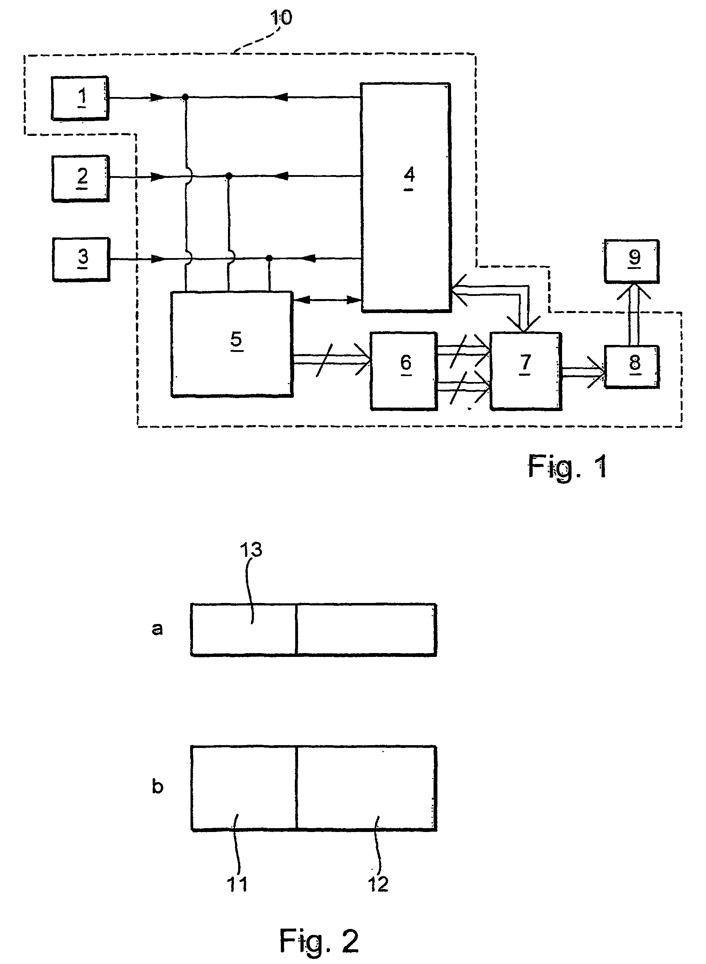

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Steuergeräts und Figur 2 einen Rahmen der Prozessor-Sensor-Kommunikation.

### Beschreibung

Durch den zunehmenden Einsatz von immer mehr Rückhaltemitteln, das sind insbesondere Airbags in Kraftfahrzeugen, ist die situationsgerechte Auslösung von diesen Rückhaltemitteln zu gewährleisten. Fatal ist eine Fehlauslösung von Rückhaltemitteln, die einerseits zu schweren Verletzungen führen kann und andererseits Kosten für den Fahrzeughalter unnötigerweise verursacht. Erfindungsgemäß wird daher ein Steuergerät für ein Rückhaltesystem in einem Kraftfahrzeug vorzuschlagen, das einen Sicherheitsschalter, der auch einen Watchdog beinhaltet, aufweist, der neben der Überwachung des Prozessors auch die Sensorwerte der einzelnen Crashsensoren auf Plausibilität überprüft und nur, wenn der Sicherheitsschalter selbst erkennt, dass ein Auslösefall vorliegt, die entsprechenden Endstufen der anzusteuernden Zündkreise freigibt. Dabei ist insbesondere vorgesehen, dass der Sicherheitsschalter selektiv die den einzelnen Sensoren zugeordneten Rückhaltemittelgruppen freigibt. Die Rückhaltemittel wie Airbags werden von anzusteuernden Zündkreisen aus gezündet, die wiederum von Endstufen aus betrieben werden, wobei die Endstufen von einer Zündkreisansteuerung, das ist ein integrierter Schaltkreis, angesteuert werden. Die Zündkreisansteuerung ist wiederum mit dem Prozessor und hier erfindungsgemäß auch mit dem Sicherheitsschalter verbunden, um nur in einem erkannten Auslösefall die entsprechenden Endstufen freizugeben.

In Figur 1 ist als Blockschaltbild das erfindungsgemäße Steuergerät dargestellt, das mit Sensoren und Rückhaltemitteln verbunden ist. Ein Beschleunigungssensor 1 in Fahrtrichtung ist an einen ersten Datenein-/-ausgang eines Prozessors 4, der hier ein Mikrocontroller ist, angeschlossen. Der Beschleunigungssensor 1 weist Elektronik auf, die die Meßsignale verstärkt und digitalisiert. Weiterhin fügt diese Elektronik Zusatzinformationen hinzu, ob ein Fehler vorliegt oder ob es sich um einen laufenden Test handelt. Eine weitere kanalspezifische Information ist beispielsweise eine Safety-ID, die die Sensorsignale in auslöserelevant und nicht-auslöserelevant klassifiziert und im Falle der Auslöserelevanz die Art der Signalquelle angibt, also ob es sich um einen Front-, Seiten- oder Satellitensensor handelt.

An einen zweiten Datenein-/-ausgang des Prozessors 4 ist ein Seitenaufprallsensor 2 auf der rechten Beifahrertür angeschlossen. Auf diesem Seitenaufprallsensor 2 weist eine dem Sensor 1 entsprechende Elektronik zur Auswertung und Verarbeitung der Signale auf. Dies gilt auch für einen Sensor 3, der für die Seitenaufprallsensierung auf der Fahrerseite verwendet wird. Der Sensor 3 ist an den dritten Datenein-/-ausgang des Prozessors 4 angeschlossen. Die Leitungen, die die Sensoren 1, 2 und 3 mit dem Prozessor 4 verbinden, werden jeweils angezapft, um diese Signale auch an den ersten, zweiten und dritten Dateneingang eines Sicherheitsschalters 5 zu übertragen.

Über einen Datenein-/-ausgang ist der Watchdog im Sicherheitsschalter 5 mit einem vierten Datenein-/-ausgang des Prozessors 4 verbunden, um die Funktionsfähigkeit des Prozessors 4 zu überprüfen. Dies kann beispielsweise durch Testfragen vorgenommen werden, die an den Prozessor 4 übertragen werden und die der Prozessor 4 entsprechend beantworten muß, um seine Funktionsfähigkeit zu beweisen.

Über einen Datenausgang mit mehreren Leitungen ist der Sicherheitsschalter 5 an eine Zeiteinheit 6 angeschlossen. Die Zeiteinheit 6 stellt einen Teil des Sicherheitsschalters dar, im Blockschaltbild wird hier eine logische Trennung vollzogen. Die Zeiteinheit 6 ist über zwei Datenausgänge mit jeweils mehreren Leitungen an eine Zündkreisansteuerung 7 angeschlossen. Der Prozessor 4 ist über einen fünften Datenein-/-ausgang an einen Datenein-/-ausgang der Zündkreisansteuerung 7 angeschlossen. Die Zündkreisansteuerung 7 ist über einen Datenausgang, der ebenfalls mehrere Leitungen aufweist an die Endstufen 8 angeschlossen, die wiederum über einen Ausgang an die Rückhaltemittel mit Zündkreisen 9 angeschlossen sind.

Der Prozessor 4, der Sicherheitsschalter 5 mit der Zeiteinheit 6, die Zündkreisansteuerung 7, die Endstufen 8 und der Sensor 1 sind hier die Komponenten des Steuergeräts 10. Darüber hinaus ist es möglich, dass das Steuergerät 10 eine eigene Sensorplattform aufweist, um entsprechende Sensorsignale von Satellitensensoren, das sind im Fahrzeug verteilte Sensoren, zu verifizieren, also eine Plausibilitätsuntersuchung durchzuführen. Das Steuergerät 10 kann weiterhin an Fahrzeugbusse angeschlossen sein, um Daten zu empfangen und zu versenden, beispielsweise um Sensordaten anderen Fahrzeugsystemen zugänglich zu machen.

Der Sicherheitsschalter 5 führt nun eine Plausibilitätsuntersuchung der Sensorsignale der Sensoren 1, 2 und 3 durch und gibt über die Zeiteinheit 6 und die Zündkreisansteuerung 7 Endstufen frei, sofern die Sensorsignale mit Zusatzinformationen einen Auslösefall anzeigen und der Sicherheitsschalter 5 diesen Auslösefall selbst anhand der Sensorsignale mittels berechneter Algorithmen erkennt. Dazu weist der Sicherheitsschalter 5 eine eigene Hardware auf, in der die entsprechenden Algorithmen und auch die entsprechenden Schwellen abgelegt sind, um die einzelnen Sensorsignale der Sensoren 1, 2 und 3 jeweils zu verarbeiten. Dabei ist es unerheblich, aus welcher Richtung die Sensorsignale kommen. Der Sicherheitsschalter 5 ist derart ausgebildet, dass er die Sensorsignale, unabhängig von welchem Sensor sie kommen, verarbeiten kann und auf Auslösefälle untersuchen kann. Damit ist vorteilhafterweise ein multidirektionaler elektronischer Sicherheitsschalter realisiert. Die Schwellen, die der Sicherheitsschalter 5 untersucht, entscheiden daher, ob ein Sensorsignal auslöserelevant ist, also ein Crashfall vorliegt oder nicht. Ist das nicht der Fall, dann läßt der Sicherheitsschalter 5 die entsprechenden Endstufen gesperrt und der Prozessor 4 kann dies auch nicht überstimmen. Erkennt jedoch der Sicherheitsschalter 5 einen Auslösefall, dann werden über die Zeiteinheit 6 für eine vorgegebene Zeit diese Endstufen für die entsprechenden Rückhaltemittel durch die Zündkreisansteuerung 7 freigegeben. Der Prozessor 4 kann dann nach seiner eigenen Auswertung diese Endstufen aktivieren.

Bei dem Starten des Kraftfahrzeugs wird das Steuergerät 10 eingeschaltet, und es erfolgt eine Prüfung der einzelnen ICs, wozu auch der Sicherheitsschalter 5, der auch einen Watchdog aufweist, gehört. Zur Prüfung der hier beschriebenen Funktionalität des Sicherheitsschalters 5, der daneben auch den Prozessor 4 laufend überwacht, wird ein Sensortest herangezogen. In den Sensoren 1, 2 und 3 wird eine Testantwort, also ein künstliches Sensorsignal erzeugt, das vom Prozessor 4 eingelesen wird. Diese Testantwort ist so beschaffen, so dass sie, durch den Sicherheitsschalter 5 ausgewertet, zu einer Freigabe der Plusendstufen, die die Endstufen 8 aufweisen, führt. Der Sicherheitsschalter 5 liest diese Daten mit, um seine Überwachungsfunktion zu erfüllen, und bewertet sie. Der Prozessor 4 überwacht dabei die Datenausgänge der Zeiteinheit 6 zur Zündkreisansteuerung 7 und kann an der Änderung der Signalpegel die richtige Funktion des Sicherheitsschalters 5 erkennen.

Da diese Sensortestantworten so groß gewählt sein, dass ein Crashfall signalisiert wird, wird es zu einer Freigabe der Endstufen 8 kommen. Diese Freigabe wird vom Prozessor 4 überwacht. Damit kommt es immer zu einem Test des Sicherheitsschalters 5, wenn die Sensoren 1, 2 und 3 selbst getestet werden. Zur Absicherung gegen fehlerhaftes Auslösen der Endstufen 8 während dem Sensortest wertet der Sicherheitsschalter 5 sowohl die Testaufforderung vom Prozessor 4 an die Sensoren 1, 2 und 3 aus, die zur Sperrung der Minusendstufen, die die Endstufen 8 aufweist, führt, als auch die in den Sensordaten enthaltene Kennung laufender Tests die ebenso aber unabhängig zur Sperrung der Minusendstufen führt.

Die parallelen Leitungen, die vom Sicherheitsschalter 5 zur Zeiteinheit 6 führen, weisen zwei Freigabeleitungen auf, die generelle Freigabeleitungen sind, wobei die eine für die Plusendstufen verwendet wird und die zweite für die Minusendstufen. Darüber hinaus weisen die parallelen Leitungen vom Sicherheitsschalter 5 zur Zeiteinheit 6 Gruppenleitungen auf, die für die jeweiligen Gruppen von Rückhaltemitteln zur Freigabe verwendbar sind. Beispielsweise für die, die in Fahrtrichtung eingesetzt werden. Entsprechende Leitungen führen dann von der Zeiteinheit 6 zur Zündkreisansteuerung 7. Die Zeiteinheit 6 gibt im Auslösefall die Endstufen 8 für eine Zeit von einigen zehn Millisekunden frei.

Figur 2 zeigt einen Übertragungsrahmen. Teil a wird von dem Prozessor 4 an die Sensoren 1, 2 und 3 übertragen. Dieser weist eine 16 Bit-Botschaft auf, die einen Befehl 13 aufweist, den die Sensoren mit Sensordaten beantworten. Fig. 2 zeigt weiterhin den Teil b des Übertragungsrahmens, den die Sensoren 1, 2 und 3 zeitgleich zum Teil a an den Prozessor 4 und den Sicherheitsschalter 5 zurückübertragen, der ein Feld 11 für die Zusatzinformationen und ein Feld 12 für die eigentlichen Sensorsignale aufweist. Der Sicherheitsschalter 5 und der Prozessor 4 synchronisieren sich auf diese Rahmen, um dann die einzelnen Daten entsprechend auslesen zu können. Dies wird IN-Frame-Response genannt.

Im Folgenden werden noch einmal verschiedene Ereignisse beschrieben und zu welchen Sperrungen der Endstufen 8 dies jeweils führt. Befindet sich der Watchdog im Sicherheitsschalter 5 in einer Sperrphase, d.h. der Watchdog wurde nicht richtig bedient und sperrt für eine vorgegebene Zeit, oder läuft ein Sensortest, es ist aber noch kein signifikantes Signal empfangen worden, werden alle Plus- und alle Minusendstufen und alle Zündmittelgruppen auf Sperrungen geschaltet. Befindet sich jedoch der Watchdog im Sicherheitsschalter 5 nicht in einer Sperrphase, und es wurde kein signifikantes Sensorsignal von einem der Sensoren 1, 2 und 3 empfangen, werden alle Plusendstufen gesperrt, aber alle Minusendstufen werden freigegeben, um einen Test der Minusendstufen gegebenenfalls durchzuführen. Es werden jedoch alle Zündmittelgruppen gesperrt. Befindet sich nun der Watchdog im Sicherheitsschalter 5 nicht in der Sperrphase, und es läuft ein Sensortest und ein signifikantes Signal wurde beispielsweise von dem Sensor 1 empfangen, dann werden alle Plusendstufen freigegeben, so dass ein Test der Plusendstufen möglich ist, aber alle Minusendstufen gesperrt werden. Die Zündmittel in Fahrtrichtung werden jedoch freigegeben. Befindet sich der Watchdog im Sicherheitsschalter 5 nicht in einer Sperrphase und der Sensortest läuft und ein signifikantes Signal wurde empfangen, aber nicht vom Sensor 1, dann werden alle Plusendstufen freigegeben, so dass ein Test der Plusendstufen möglich ist und wiederum werden alle Minusendstufen gesperrt und auch die Zündmittel in Fahrtrichtung werden gesperrt.

Befindet sich der Watchdog im Sicherheitsschalter 5 nicht in der Sperrphase, und es wird kein Sensortest durchgeführt und ein signifikantes Signal wurde vom Sensor 1 empfangen, dann werden alle Plusendstufen und auch alle Minusendstufen freigegeben, so dass Feuerbereitschaft vorliegt, und es werden die entsprechenden Zündmittel in Fahrtrichtung freigegeben, so dass eine Zündung der Airbags möglich wird. Befindet sich der Watchdog im Sicherheitsschalter 5 nicht in der Sperrphase, und es erfolgt kein Sensortest und ein signifikantes Signal wurde empfangen, jedoch nicht vom Sensor 1, dann werden alle Plusendstufen und alle Minusendstufen freigegeben, es besteht Feuerbereitschaft, aber die Zündmittel in Fahrtrichtung werden gesperrt. Signifikantes Signal bedeutet hier, dass ein Signal vorliegt, das durch den Hardware-Algorithmus des Sicherheitsschalters 5 berechnet und mit den Schwellen bewertet einen Auslösefall anzeigt.

## Patentansprüche

1. Steuergerät für ein Rückhaltesystem in einem Kraftfahrzeug, wobei das Steuergerät (10) einen Prozessor (4) und einen Sicherheitsschalter (5) aufweist, wobei der Prozessor (4) mit Sensoren (1, 2, 3) zur Aufprallsensierung und mit Endstufen (8) zur Ansteuerung des Rückhaltesystems verbindbar ist, wobei die Sensoren gegebenenfalls einen Aufprall des Kraftfahrzeugs sensieren, **dadurch gekennzeichnet, dass** der Sicherheitsschalter (5) mit den Sensoren (1, 2, 3) zur Plausibilitätsüberprüfung der Sensorsignale und mit einer Zeiteinheit (6) zur Freigabe der Endstufen (8) von Zündkreisen (9) in Abhängigkeit von den Sensorsignalen verbindbar ist, wobei der Sicherheitsschalter (5) Mittel zur Auswertung der Sensorsignale aufweist und die Zeiteinheit (6) die Endstufen (8) für eine vorgegebene Zeit freigibt, wobei die Mittel zur Auswertung der Sensorsignale derart konfiguriert sind, dass die einzelnen Sensorsignale jeweils verarbeitbar sind und auf Auslösefälle untersuchbar sind.

2. Steuergerät nach Anspruch 1, **dadurch gekennzeichnet, dass** der Sicherheitsschalter (5) Zusatzinformationen aus den Sensorsignalen entnimmt und in Abhängigkeit von den Zusatzinformationen die Sensorsignale verarbeitet.

3. Steuergerät nach Anspruch 1 oder 2, **dadurch gekennzeichnet, dass** der Sicherheitsschalter (5) den jeweiligen Sensoren (1, 2, 3) zugeordnete Endstufen (8) freigibt.

4. Steuergerät nach Anspruch 1, 2 oder 3, **dadurch gekennzeichnet, dass** der Prozessor (4) beim Einschalten des Steuergeräts (10) einen Test des Sicherheitsschalters (5) durch Erzeugen eines Testsignals der Sensoren (1, 2, 3) durchführt.

5. Steuergerät nach einem der vorhergehenden Ansprüche, **dadurch gekennzeichnet, dass** der Sicherheitsschalter (5) mit den Endstufen (8) über die Zeiteinheit (6) über zwei Freigabeleitungen jeweils mit allen Plusendstufen und allen Minusendstufen und mit weiteren Gruppenleitungen mit den Endstufen (8) von Zündmittelgruppen verbindbar ist.

6. Steuergerät nach Anspruch 4 oder 5, **dadurch gekennzeichnet, dass** während des Tests zumindest die Plus- oder Minusendstufe der Endstufen (8) sperrbar ist.

## Claims

1. Control unit for a restraining system in a motor vehicle, where the control unit (10) has a processor (4) and a safety switch (5), where the processor (4) can be connected to sensors (1, 2, 3) for impact sensing and to output stages (8) for actuating the restraining system, where the sensors sense any impact on the motor vehicle if appropriate, **characterized in that** the safety switch (5) can be connected to the sensors (1, 2, 3) for plausibility checking the sensor signals and to a time unit (6) for enabling the output stages (8) of ignition circuits (9) on the basis of the sensor signals, where the safety switch (5) has means for evaluating the sensor signals, and the time unit (6) enables the output stages (8) for a prescribed time, where the means for evaluating the sensor signals are configured such that the individual sensor signals can each be processed and can be examined for instances of triggering.

2. Control unit according to Claim 1, **characterized in that** the safety switch (5) takes additional information from the sensor signals and processes the sensor signals on the basis of the additional information.

3. Control unit according to Claim 1 or 2, **characterized in that** the safety switch (5) enables output stages (8) associated with the respective sensors (1, 2, 3).

4. Control unit according to Claim 1, 2 or 3, **characterized in that** the processor (4) tests the safety switch (5) when the control unit (10) is turned on by generating a test signal for the sensors (1, 2, 3).

5. Control unit according to one of the preceding claims, **characterized in that** the safety switch (5) can be connected to the output stages (8) via the time unit (6) by means of two enabling lines, respectively to all positive output stages and to all negative output stages, and by means of further group lines to the output stages (8) of primer groups.

6. Control unit according to Claim 4 or 5, **characterized in that** at least the positive or negative output stage of the output stages (8) can be disabled during the test.

## Revendications

1. Unité de commande pour système de retenue dans un véhicule à moteur, l'unité de commande (10) présentant un processeur (4) et un commutateur de sécurité (5), le processeur (4) pouvant être relié à des détecteurs (1, 2, 3) pour la détection d'impact et des étages finaux (8) pour la commande du système de retenue, les détecteurs détectant éventuellement un impact du véhicule à moteur,
**caractérisée en ce que**
le commutateur de sécurité (5) peut être relié aux détecteurs (1, 2, 3) pour la vérification de la plausibilité des signaux de détecteur et à une unité de durée (6) pour l'activation des étages finaux (8) de circuits d'allumage (9) en fonction des signaux de détecteur, le commutateur de sécurité (5) présentant des moyens pour exploiter les signaux de détecteur et l'unité de durée (6) activant les étages finaux (8) pendant une durée prédéterminée, les moyens pour l'exploitation des signaux de détecteur étant configurés de telle manière que chacun des signaux de détecteur peut être traité individuellement pour détecter des cas de déclenchement.

2. Unité de commande selon la revendication 1,
**caractérisée en ce que**
le commutateur de sécurité (5) extrait des informations complémentaires des signaux de détecteur et traite les signaux de détecteur en fonction de ces informations complémentaires.

3. Unité de commande selon la revendication 1 ou 2,
**caractérisée en ce que**
le commutateur de sécurité (5) active les étages finaux (8) associés aux détecteurs (1, 2, 3) respectifs.

4. Unité de commande selon la revendication 1, 2 ou 3,
**caractérisée en ce que**
le processeur (4) exécute à la mise sous tension de l'unité de commande (10) un test du commutateur de sécurité (5) en générant un signal de test des détecteurs (1, 2, 3).

5. Unité de commande selon l'une quelconque des revendications précédentes,
**caractérisée en ce que**
le commutateur de sécurité (5), avec les étages finaux (8), à travers l'unité de durée (6), à travers deux lignes d'activation, peut être relié respectivement à tous les étages finaux plus et tous les étages finaux moins et à d'autres lignes de groupes avec les étages finaux (8) de groupes de moyens d'allumage.

6. Unité de commande selon la revendication 4 ou 5,
**caractérisée en ce que**
pendant le test au moins l'étage final plus ou moins des étages finaux (8) peut être verrouillé.
